# EUROPÄISCHE PATENTANMELDUNG

(11) **EP 0 952 616 A2**
(43) Veröffentlichungstag der Anmeldung: **27.10.1999**
(21) Anmeldenummer: 99101504.1
(22) Anmeldetag: 27.01.1999
(51) Int. Cl.: H01L 31/042, E04D 13/18, E04D 3/36, E04B 2/00

(54) **Dach-und/oder Wandaufbau sowie Verwendung hiervon**

(30) Priorität: 27.01.1998 DE 19802997
(71) Anmelder: Hartwig, Jürgen, Dipl.-Ing., 71642 Ludwigsburg (DE)
(72) Erfinder: Hartwig, Jürgen, Dipl.-Ing., 71642 Ludwigsburg (DE); Stephan, Hans-A., Dipl.-Ing., 71665 Vaihingen (DE)
(74) Vertreter: Helms, Joachim, Dipl.-Ing. Patentanwalt

(57) **Zusammenfassung**

Die vorliegende Erfindung betrifft einen Dach- und/oder Wandaufbau zur Anbringung bzw. Befestigung an einem Bereich einer Gebäudewand und/oder eines Gebäudedaches, wobei an einem tragfähigem Teil (10) des Gebäudes ein Dämmelement (20) befestigt ist, wobei das Dämmelement (20) an der vom tragfähigem Teil (10) abgewandten Seite zumindest eine Profilrippe (22) aufweist, und wobei an der Profilrippe (22) ein Außen- bzw. Fassadenelement (30), insbesondere ein photovoltaisches Element mittels einer Halteeinrichtung (40) angebracht ist bzw. anliegt. Die vorliegende Erfindung betrifft weiterhin eine Verwendung eines Dach- und/oder Wandaufbaus nach einem der vorangehenden Ansprüche zur Anbringung von einer oder mehreren photovoltaischen Zellen bzw. Paneelen an einem Gebäude.

## Beschreibung

Die vorliegende Erfindung betrifft einen Dach- und/oder Wandaufbau zur Anbringung bzw. Befestigung an einem Bereich einer Gebäudewand und/oder eines Gebäudedaches sowie eine Verwendung hiervon.

Es ist bekannt zur Anbringung von Dach- bzw. Wandaufbauten eine Tragekonstruktion an dem Gebäude vorzusehen, an welche der Aufbau befestigt wird. Bei einem großflächigen Aufbau ist jedoch die Tragekonstruktion sehr aufwendig und kostenintensiv.

Es ist daher Aufgabe der vorliegenden Erfindung einen Dach- und/oder Wandaufbau zur Anbringung bzw. Befestigung an einem Bereich einer Gebäudewand und/oder eines Gebäudedaches sowie eine Verwendung hiervon bereitzustellen, der bzw. die konstruktiv einfach und kostengünstig ist.

Diese Aufgabe wird durch einen Dach- und/oder Wandaufbau zur Anbringung bzw. Befestigung an einem Bereich einer Gebäudewand und/oder eines Gebäudedaches gemäß Anspruch 1 sowie durch eine Verwendung gemäß Anspruch 21 gelöst. Bevorzugte Ausführungsformen sind Gegenstand der Unteransprüche.

Erfindungsgemäß ist ein Dach- und/oder Wandaufbau zur Anbringung bzw. Befestigung an einem Bereich einer Gebäudewand und/oder eines Gebäudedaches vorgeschlagen, in dem an einem tragfähigem Teil bzw. Unterbau des Gebäudes ein Dämmelement befestigt ist, wobei das Dämmelement auf bzw. an der vom tragfähigem Teil abgewandten Seite zumindest eine Profilrippe aufweist, und wobei an der Profilrippe ein Außen- bzw. Fassadenelement, insbesondere ein photovoltaisches Element bzw Modul bzw. Zelle mittels einer Halteeinrichtung angebracht ist bzw. anliegt.

Erfindungsgemäß ist somit vorteilhaft ein Fassadenelement ohne Rahmen bzw. Unterkonstruktion zwischen Fassadenelement und Dämmelement anbringbar. Durch das Anbringen bzw. Anliegen der Halteeinrichtung auf der Profilrippe werden somit die Windsog- und Winddruckbelastungen auch ohne einen Tragerahmen zuverlässig abgeleitet und die Abmessungen des Dach- bzw. Wandaufbaus vorteilhaft gering gehalten. Es werden somit vorteilhaft auch die Montagekosten und -zeiten erniedrigt, da nicht zuerst eine Unterkonstruktion vollständig montiert werden muß, bevor die Fassadenelemente angebracht werden, sondern es ist vorteilhaft möglich, die Halteeinrichtung gleichzeitig mit der Befestigung der Dämmelemente anzubringen. Das Dämmelement hat weiterhin durch die Ausbildung mit zumindest einer Profilrippe eine erhöhte Festigkeit und Steifigkeit.

Gemäß einer bevorzugten Ausführungsform der Erfindung, weist die Halteeinrichtung mindestens ein Auflage- bzw. Anlageprofil und ein Druck- bzw. Klemmprofil auf, wobei das Anlageprofil und das Klemmprofil jeweils einen Anlagebereich aufweisen, an bzw. auf dem das Fassadenelement anliegt, wobei das Fassadenelement zwischen dem Anlageprofil und dem Klemmprofil eingeklemmt ist.

Durch diese einfache und kostengünstige Ausgestaltung der Halteeinrichtung können Winddruck- und Windsogbelastung zuverlässig aufgenommen werden.

Bevorzugt sind das Anlagenprofil und das Klemmprofil aufeinander zu bewegbar und werden mittels eines Verstellgliedes, bevorzugt einer Schraube bewegt, um das Fassadenelement zwischen dem Anlageprofil und dem Klemmprofil einzuklemmen.

Weiterhin bevorzugt werden das Anlagenprofil und das Klemmprofil mittels an diesen vorgesehenen Ausrichtflächen in ihrer Position zueinander ausgerichtet, wobei die Ausrichtflächen bevorzugt gleitend aneinander anliegen.

Dementsprechend ist vorteilhaft gewährleistet, daß das Fassadenelement sicher geklemmt ist, da die Profile bevorzugt nicht gegeneinander in der Fassadenelement-Ebene verschiebbar sind und durch die Ausrichtflächen gegeneinander im wesentlichen zentriert werden. Weiterhin wird eine erhöhte Versteifung der Profile durch die Ausrichtflächen erzielt.

Am bevorzugtesten ist zwischen Anlageprofil und Fassadenelement und/oder zwischen Klemmprofil und Fassadenelement ein elastisches Zwischenelement vorgesehen.

Es ist somit eine einfache Abdichtung der Stoßbereiche möglich. Weiterhin ist eine Kräfteaufnahme z.B. der Windbelastungen im wesentlichen ohne Beschädigung der Fassadenelemente, insbesondere der photovoltaischen Elemente möglich. Weiterhin kann eine thermische Ausdehnung der Fassadenelemente weitgehend aufgenommen werden.

Gemäß einer weiteren Ausführungsform ist die Halteeinrichtung mittels einer Befestigungsschraube durch das Dämmelement hindurch direkt an dem tragfähigem Teil bzw. Unterbau des Gebäudes befestigt, bevorzugt mittels einer Schraube.

Mittels der direkten Befestigung an dem tragfähigem Unterbau des Gebäudes ist eine sichere Kraftabführung gewährleistet, so daß der Dach- bzw. Wandaufbau sicher befestigt ist. Weiterhin erlaubt diese einfache Anordnung eine kostengünstige Befestigung des Aufbaus an dem Gebäude.

Bevorzugt umfaßt die Befestigungsschraube bevorzugt im Anlagebereich eine Dichtungseinrichtung, welche bevorzugt eine Unterlegscheibe mit aufvulkanisierter Neoprendichtung aufweist.

Dementsprechend ist eine einfache Abdichtung auch im Befestigungsbereich der Schraube gewährleistet.

Weiterhin bevorzugt weist das tragfähige Teil bzw. der Unterbau einen Pfosten und/oder einen Riegel des Gebäudes auf.

Gemäß einer weiteren bevorzugten Ausführungsform ist das Dämmelement ein Sandwich-Verbundelement, welches eine Außenschicht, eine Innenschicht und dazwischen eine Kernschicht, insbesondere aus Polyurethan und/oder Mineral-wolle aufweist, wobei die Außenschicht und/oder die Innenschicht angeschäumt bzw. schubfest miteinander verklebt ist/sind.

Mittels der Benutzung von Sandwich-Verbundelementen kann eine einfache Profilierung des Dämmelementes erreicht werden, so daß eine hohe Steifigkeit bei gleichzeitig guter Wärmedämmung bereitgestellt ist. Die Kräfteabtragung durch die Profilrippe ist wegen der erhöhten Steifigkeit vorteilhaft verbessert.

Bevorzugt ist die Außenschicht und/oder Innenschicht aus einem oder mehreren der folgenden Materialien gebildet: Stahl, verzinktem Stahl, Aluminium, Kupfer.

Somit ist ein kostengünstiger Dämmelement-Abschluß bzw. Oberfläche bereitgestellt, der eine einfache Profilierung, insbesondere mit den Profilrippen sowie weiteren Versteifungsrippen vorgesehen ist.

Am bevorzugtesten ist das Material bedruckt und/oder beschichtet. Es ist somit vorteilhaft möglich, den Dach- bzw. Wandaufbau gegen Alterungsprozesse zu schützen und den ästhetischen Gesamteindruck des Aufbaus zu verbessern, z.B. durch Anbringung an einer Wand, an der keine photovoltaischen Elementen vorgesehen sind, eines Fassadenelementes mit einem Aufdruck, der ein photovoltaisches Element nachbildet.

Gemäß einer weiteren bevorzugten Ausführungsform ist die Profilrippe des Dämmelementes mittels einer Außenschicht, bevorzugt aus Metall oder einer Legierung verstärkt.

Dementsprechend weist die Profilrippe eine erhöhte Steifigkeit bzw. Festigkeit auf, so daß die durch den Wind oder anderen Belastungen (z. B. weiteren Dachaufbauten, wie Antennen oder dgl.) erzeugten Kräfte zuverlässig abgeführt werden können.

Bevorzugt sind eine Vielzahl von benachbart zueinander angeordneten Dämmelementen vorgesehen, wobei die Dämmelemente bevorzugt durch einen an jeweils einem der Dämmelemente vorgesehenen Elementenstoß miteinander verbunden sind.

Es wird somit gewährleistet, daß die Dämmelemente korrekt zueinander ausgerichtet sind und keinerlei Spalte vorkommen. Falls eine Profilrippe in dem Elementenstoß angeordnet ist kann sich der Elementenstoß eines Dämmelementes bevorzugt über die Profilrippe des benachbarten Dämmelementes erstrecken, so daß eine weitere Versteifung der Profilrippe erzielt wird.

Weiterhin bevorzugt ist zwischen Elementenstoß eines Dämmelementes und dem diesen benachbartem Dämmelement ein Dichtelement, bevorzugt ein Dichtstreifen eingesetzt.

Dementsprechend kann der Verbindungsbereich bzw. Längsstoß der Dämmelemente (insbesondere in Wetterrichtung) zuverlässig und kostengünstig gegen Feuchtigkeit und/oder Luft- bzw. Windeintritt abgedichtet werden.

Gemäß einer weiteren bevorzugten Ausführungsform ist zwischen dem Fassadenelement und dem Dämmelement bereichsweise ein Hohlraum vorgesehen, welcher zumindest teilweise hinterlüftbar ist. Die Hinterlüftung kann sowohl durch freie Konvektion der Luftmassen z.B. mittels einer geeigneten Neigung des Aufbaus und/oder durch Einsatz von Lüftern zur Zwangszirkulation von Luft erzielt werden.

Es kann somit insbesondere bei Benutzung eines photovoltaischen Elementes als Fassadenelement ein günstigerer Wärme- bzw. Temperaturgradient erzielt werden, so daß das photovoltaische Element einen besseren Wirkungsgrad aufweist. Weiterhin kann eine noch bessere Wärmedämmung des Gebäudes wegen der verringerten Außentemperatur in nähe des Wärmedämmelementes erzielt werden.

Bevorzugt wird die erwärmte Luft in dem Hohlraum zur Gewinnung von Energie und/oder zur Umwandlung in andere Energieformen zumindest teilweise verwendet.

Dementsprechend kann z.B. die Energieausbeute des als Solarenergiemodul verwendeten Aufbaus verbessert werden.

Weiterhin bevorzugt ist an einem Randabschnitt des Dach- und/oder Wandaufbaus ein Abschluß- bzw. Füllelement zumindest bereichsweise, bevorzugt zwischen dem Anlageprofil und dem Klemmprofil, vorgesehen ist.

Dementsprechend ermöglicht das Abschluß- bzw. Füllelement vorteilhaft eine sichere Befestigung des Fassadenelement insbesondere durch Verbesserung der Klemmeigenschaften der Halteeinrichtung.

Gemäß einer weiteren bevorzugten Ausführungsform der Erfindung ist eine Vielzahl von benachbart zueinander angeordneten Fassadenelementen vorgesehen, wobei die Haltevorrichtung in einer Querrichtung, insbesondere in einer Richtung im wesentlichen senkrecht zu dem Anlageprofil und Klemmprofil, zumindest ein Distanzprofil aufweist, welche die Fassadenelemente beabstandet.

Das Distanzprofil ist bevorzugt in einem Bereich, in dem keine Profilrippe angeordnet ist, vorgesehen. Dementsprechend sind benachbarte Fassadenelemente beabstandet und bevorzugt abgedichtet sowie gegen Winddruck- und/oder Windsogbelastungen zusätzlich gesichert.

Bevorzugt weist das Distanzprofil zumindest einen im wesentlichen in Längsrichtung angeordneten Vorsprung auf, welcher bevorzugt zwischen dem Anlageprofil und Klemmprofil klemmbar ist.

Es ist somit eine einfache Befestigung des Distanzprofils bereitgestellt.

Weiterhin bevorzugt sind eine Vielzahl von Fassadenelementen bevorzugt um mehr als 5° zur Horizontalen geneigt angeordnet.

Dementsprechend ist insbesondere eine Hinterlüftung der Fassadenelemente durch Thermik bzw. Luftumwälzung, bevorzugt ohne Ventilator möglich

Erfindungsgemäß ist weiterhin eine Verwendung eines erfindungsgemäßen Dach- und/oder Wandaufbaus vorgesehen zur Anbringung von einer oder mehreren photovoltaischen Zellen bzw. Modulen bzw. Paneelen an einem Gebäude.

Dementsprechend ist kein Tragegerüst für photovoltaische Zellen notwendig, wodurch die Montagezeiten verkürzt und die entsprechenden Kosten erniedrigt werden. Dementsprechend verkürzt sich auch die Standzeit der Montagegerüste und es ist keine spezielle Montagetruppe für die Solarmodule notwendig.

Weitere Aufgaben, Merkmale und Vorteile der vorliegenden Erfindung werden aus der folgenden, beispielhaften Beschreibung bevorzugter Ausführungsformen anhand der Zeichnung hervorgehen, in der:
- FIG. 1: eine Draufsicht auf eine Ausführungsform der vorliegenden Erfindung zeigt;
- FIG. 2: ein Schnitt entlang A-A in FIG. 1 darstellt;
- FIG. 3: ein Schnitt entlang B-B in FIG. 1 darstellt;
- FIG. 4: ein Schnitt entlang C-C in FIG. 1 darstellt;
- FIG. 5: ein Schnitt entlang E-E in FIG. 1 darstellt;
- FIG. 6: ein Schnitt entlang D-D in FIG. 1 gemäß einer weiteren Ausführungsform darstellt;
- FIG. 7: ein Distanzprofil gemäß einer bevorzugten Ausführungsform zeigt; und
- FIG. 8: eine Ausführungsform der vorliegenden Erfindung perspektivisch darstellt.

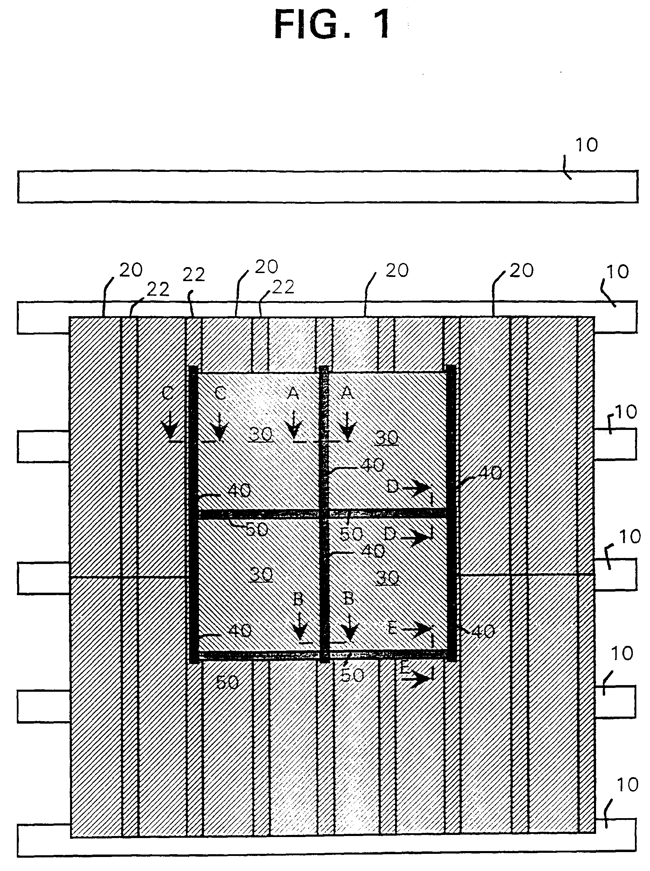

Im folgenden wird ein Dach- bzw. Wandaufbau gemäß einer Ausführungsform der vorliegenden Erfindung anhand von FIGUREN 1 bis 5 und 8 beschrieben werden.

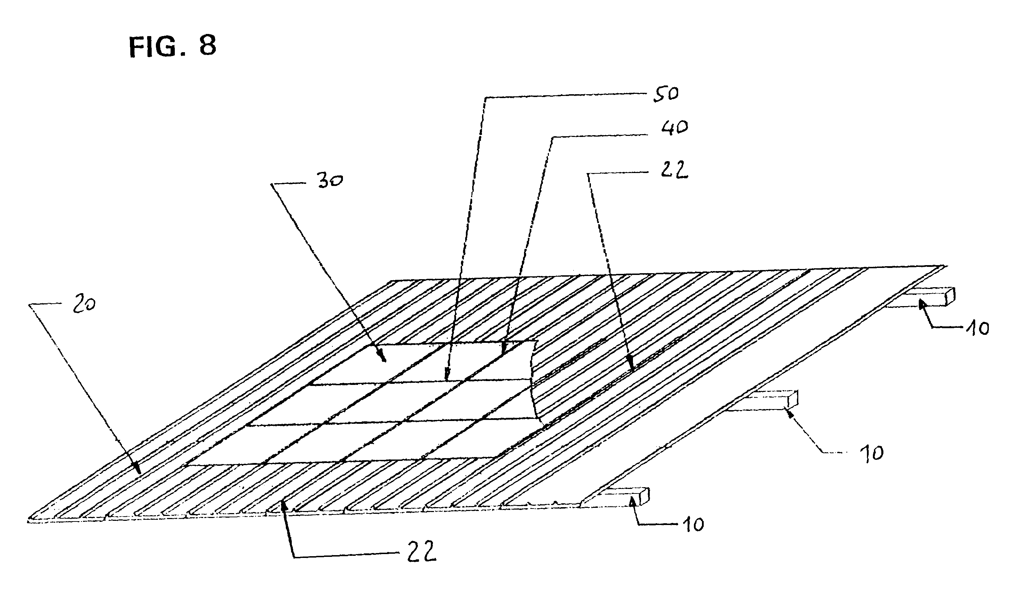

FIGUREN 1 und 8 zeigen in Draufsicht bzw. perspektivisch einen Dach- bzw. Wandaufbau, welcher auf bzw. an einem tragfähigem Teil 10, z.B. einem Unterkonstruktion bzw. -bau eines Gebäudes montiert ist. Das tragfähige Teil 10 kann ein Pfosten oder Riegel einer tragenden Unterkonstruktion eines Daches sein.

Der Aufbau umfaßt eine Vielzahl von Dämmelementen 20, welche bevorzugt als Sandwich-Verbundelement ausgebildet sind. Das Sandwich-Verbundelement weist bevorzugt eine Außenseite, eine Innenseite und einen ausgeschäumten Mittel- bzw. Kernteil (z.B. aus Polyurethan) auf, wobei die Außen- und/oder Innenseite aus Metall, wie z.B. Stahl, Kupfer oder Aluminium, gebildet sind und besonders bevorzugt angeschäumt sind. Alternativ oder zusätzlich kann der Kernteil auch aus Mineralwolle oder dgl. gebildet werden.

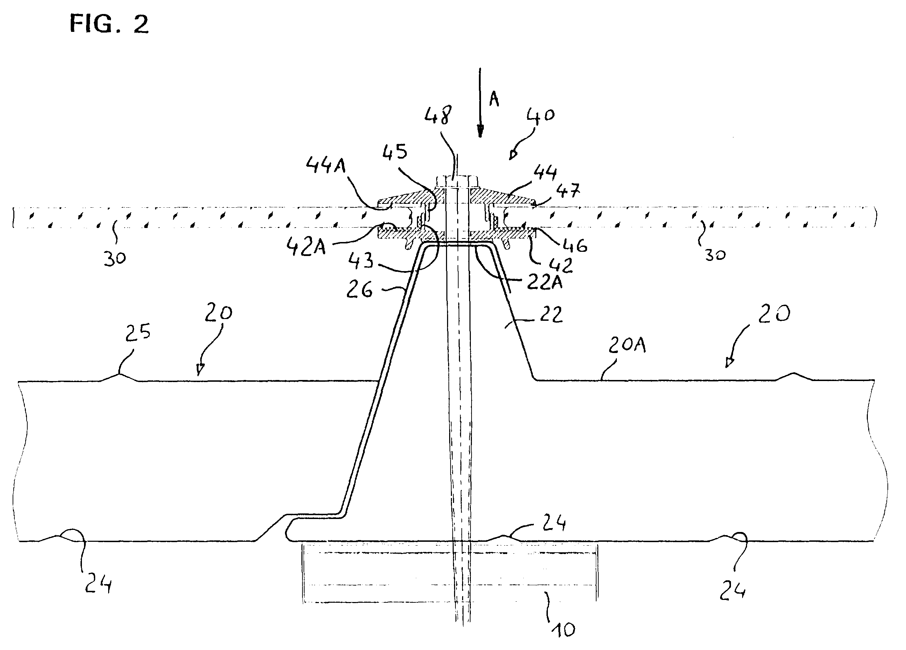

Jedes Dämmelement 20 weist einen oder mehrere Profilrippen 22 auf, welche von der Dämmelementenebene 20A bevorzugt auf einer Seite gegenüberliegend von der Unterkonstruktion bzw. dem tragfähigen Teil 10 vorspringt (vgl. insbesondere FIG. 2). Die Profilrippe 22 hat bevorzugt einen Trapez- oder Polygonzug-artigen Querschnitt und weist eine obere Profilfläche 22A auf, welche im wesentlichen parallel zu der Dämmelementenebene 20A verläuft. Das Dämmelement 20 kann zur Versteifung weiterhin eine oder mehrere Sicken 24 und/oder ein oder mehrere Wulste bzw. Vorsprünge 25 aufweisen, welche bevorzugt im wesentlichen parallel zu der Profilrippe 22 verlaufen. Entlang eines Längsstoßes des Dämmelementes 20 ist weiterhin ein Elementenstoß 26 vorgesehen, welcher bevorzugt an einer Profilrippe 22 des benachbarten Dämmelementes 20 zumindest bereichsweise anliegt. Der Elementenstoß 22 kann bevorzugt aus der Außenseite des Dämmelementes 20 ausgebildet werden, d.h. z.B. daß die Außendeckschale ausgekragt bzw. -gekröpft wird und somit eine z.B. bereichsweise der Profilrippe 22 entsprechende Form einnimmt. Der Elementenstoß 26 überdeckt bzw. überragt bevorzugt die obere Profilfläche 22A der benachbarten Profilrippe 22 (vgl. FIG. 2). Zwischen dem Elementenstoß 26 und der oberen Profilfläche 22A kann bevorzugt ein Dichtstreifen (nicht gezeigt) eingesetzt werden.

An der Profilrippe 22, bevorzugt an der oberen Profilfläche 22A werden Fassadenelemente 30, insbesondere photovoltaische Elemente, mittels einer Halteeinrichtung 40 befestigt. Die Fassadenelemente 30 sind bevorzugt beabstandet von der Dämmelementenebene 20A angeordnet, so daß ein später zu beschreibender Hohlraum 60 dazwischen besteht.

Die Halteeinrichtung 40 umfaßt ein Auf- bzw. Anlageprofil 42, ein Druck- bzw. Klemmprofil 44, zwischen welchen das Fassadenelement 30 angeordnet bzw. befestigt bzw. geklemmt werden kann. Das Anlageprofil 42 weist eine Anlagefläche 42A auf und das Klemmprofil 44 weist eine Klemmfläche 44A auf, wobei die Anlagefläche 42A und die Klemmfläche 44A die Befestigung des Fassadenelementes 30 bewirken, wodurch Kräfte aus Belastungen des Fassadenelementes 30 (z.B. Winddruck- und Windsogbelastungen) über die Flächen 42A und 44A auf die Halteeinrichtung 40 übertragen werden. Das Anlageprofil 42 und das Klemmprofil 44 weisen jeweils zumindest eine Ausrichtfläche 43 bzw. 45 auf, welche aneinander anliegen und eine relative Verschiebung der Anlage- und Klemmprofile 42 und 44 in der Ebene des Fassadenelementes 30 verhindern und lediglich deren Verschiebung entlang einer Klemmrichtung A zulassen. Es ist somit gewährleistet, daß das Fassadenelement sicher geklemmt wird.

Bevorzugt sind an der Anlagefläche 42A und/oder an der Klemmfläche 44A elastische Elemente 46 bzw. 47 (z.B. Gummidichtungen bzw. -bänder oder dgl.) vorgesehen, um die Fassadenelemente 30 beim Klemmen nicht zu beschädigen sowie um diese zur Halteeinrichtung 40 hin abzudichten.

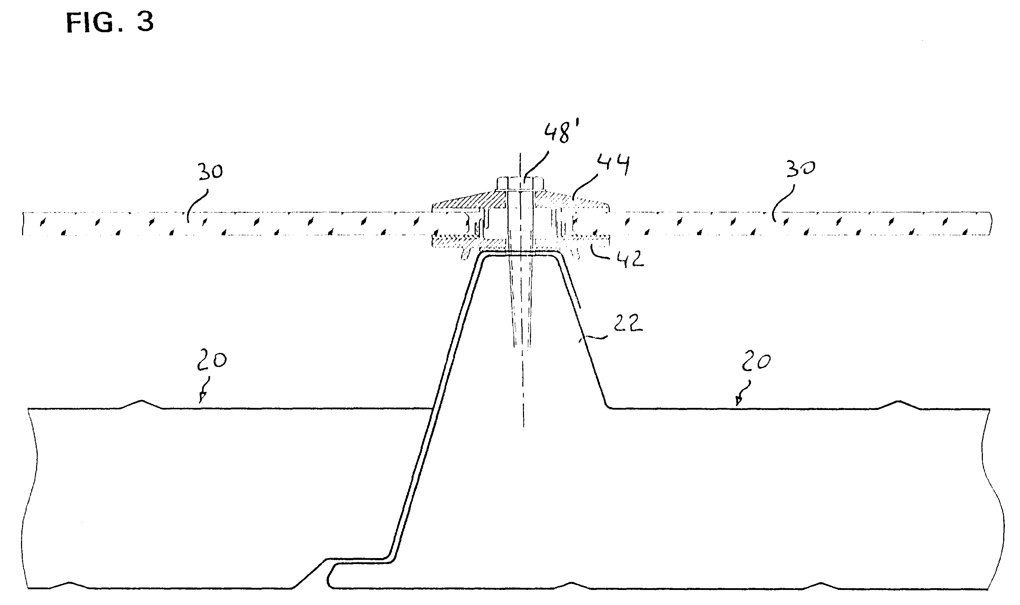

Die Halteeinrichtung 40 umfaßt weiterhin eine Schraube 48, welche bevorzugt im Schraubenkopfbereich gewindelos ist. Die Schraube 48 ragt bevorzugt mittels einer Vorbohrung durch das Dämmelement 20 hindurch und ist an dem tragfähigen Teil 10 befestigt (FIG. 2). Dementsprechend werden die Belastungen von dem Fassadenelement 30 auf die Unterkonstruktion bzw. das tragfähige Teil 10 abgeleitet. In Bereichen des Profilabschnitts 22, an dem kein tragfähiges Teil 10 angeordnet ist (Schnitt B-B in FIG. 1, FIG. 3), kann eine Schraube 48' an dem Dämmelement 20 selbst befestigt sein. Weiterhin kann eine Unterlegscheibe (nicht gezeigt) unter die Schraube 48 gelegt werden, wobei die Unterlegscheibe bevorzugt ein Dichtungsglied (z.B. aufvulkanisierte Neoprenedichtung) aufweist. Alternativ oder zusätzlich kann auch eine abdichtende Befestigungskappe vorgesehen werden.

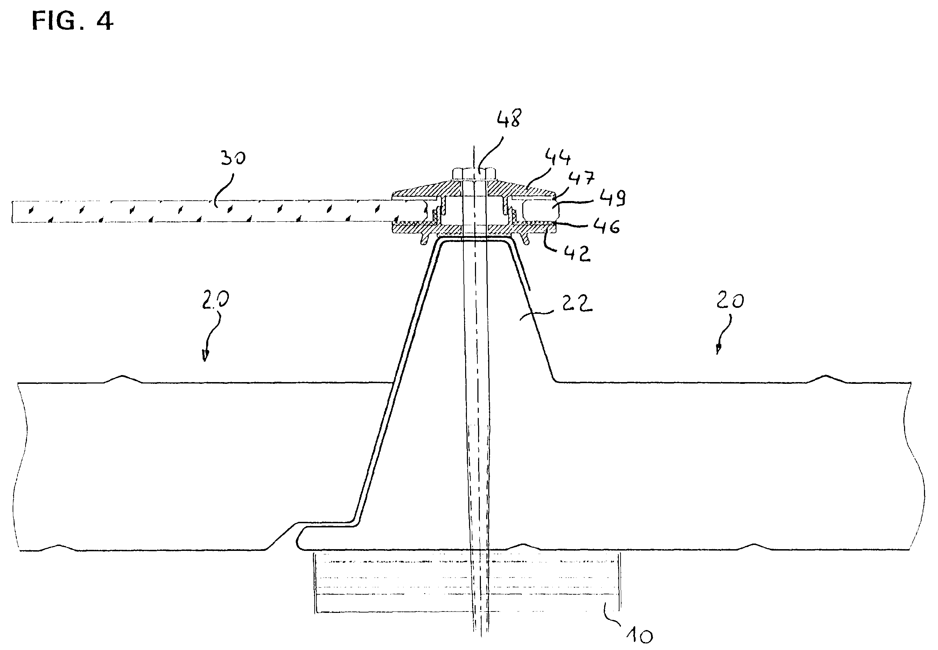

In FIG. 4 ist ein Randbereich des Dach- bzw. Wandaufbaus gezeigt (Schnitt C-C in FIG. 1) dargestellt. In dem Randbereich ist zumindest bereichsweise ein Füllelement bzw. -profil 49 vorgesehen. Das Füllelement 49 wird zwischen den Anlageflächen 42A, 44A des Anlageprofils 42 und Klemmprofils 44 angeordnet, zwischen welche kein Fassadenelement 30 angeordnet ist. Das Füllelement 49 gewährleistet eine zuverlässige Befestigung des Aufbaus durch die Halteeinrichtung 40 in diesem Randbereich, insbesondere durch die korrekte Ausrichtung und gleichmäßige Anordnung der Anlageflächen 42A, 44A. Weiterhin gewährleistet das Füllelement 49 eine Abdichtung der Halteeinrichtung 40 in dem Randbereich.

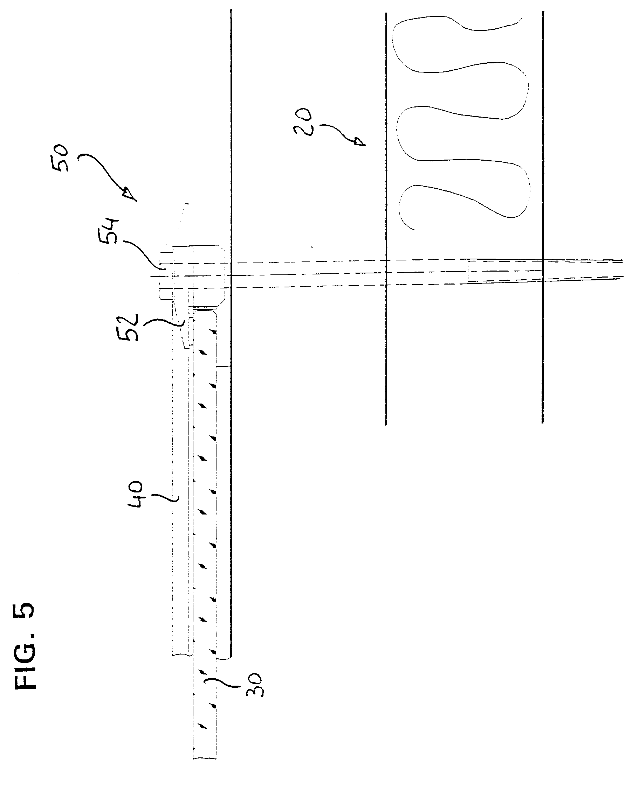

In FIG. 5 ist ein Schnitt entlang E-E in FIG. 1 dargestellt, d.h. in einem Stoßbereich der Fassadenelemente 30, welche unter einem Winkel unterschiedlich von 0° und 180°, bevorzugt von etwa 90°, zur Längsrichtung der Halteeinrichtung 40 angeordnet sind. Entlang dieses Stoßbereiches ist bevorzugt ein Distanzprofil bzw. -element 50 (insbesondere als Abschlußprofil) vorgesehen. Das Distanzelement 50 weist auskragende Bereiche 52 auf, welche das Fassadenelement 30 zusätzlich zu der Halteeinrichtung 40 (in Druck- und/oder Sogrichtung) sichern. Das Distanzelement 50 kann eine Schraube 54 umfassen, welche an dem Dämmelement 20 und/oder in dem tragfähigem Teil 10 befestigt werden kann, und gewährleistet eine korrekte Ausrichtung der Fassadenelemente zueinander und/oder deren Ausrichtung bezüglich der Dämmelemente 20, z.B. um eine perfekt ebene Außenseite des Dach- bzw. Wandaufbaues zu erzielen.

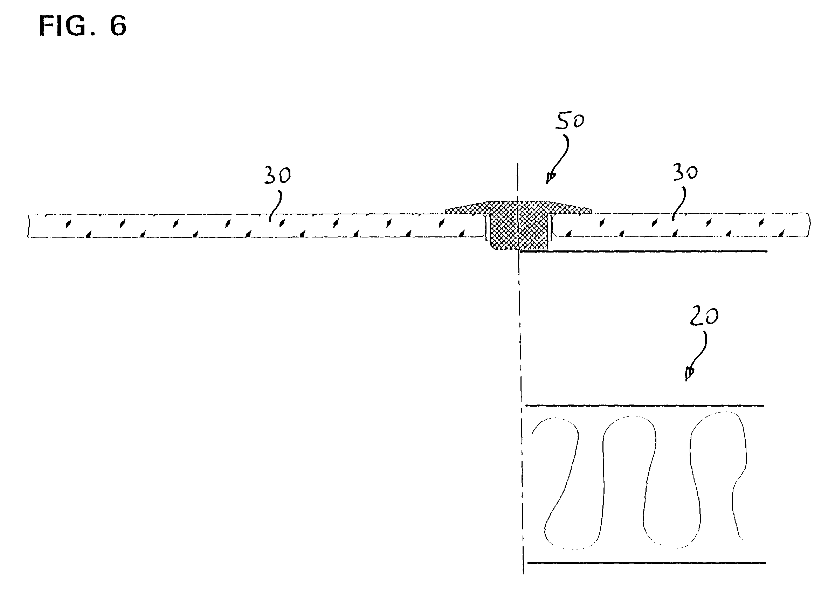

Wie aus FIG. 6 ersichtlich muß jedoch das Distanzelement 50 nicht immer mittels der Schraube befestigt werden. Es ist jedoch bevorzugt das als Abschlußprofil dienende Distanzelement 50 gemäß FIG. 5 zu verschrauben, um die Windbelastungen besser aufnehmen zu können.

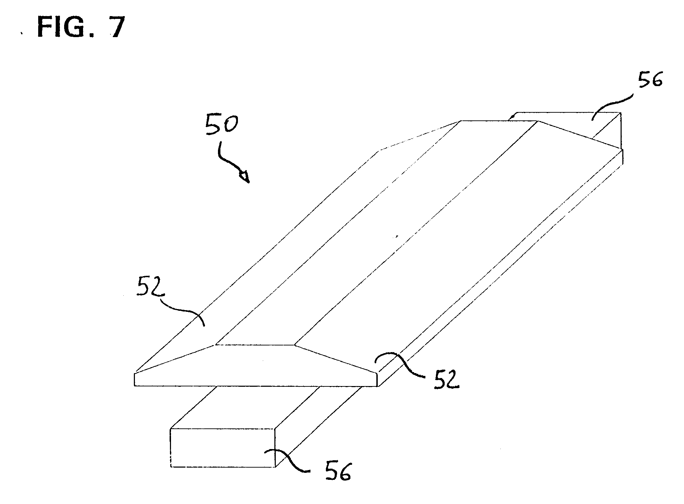

Das Distanzelement 50 ist bevorzugt wie in FIG. 7 dargestellt ausgebildet. Das Distanzelement 50 kann einen oder mehrere, sich im wesentlichen in Längsrichtung erstreckende Klemmvorsprünge 56 aufweisen, welche zwischen dem Anlageprofil 42 und dem Klemmprofil 44 der entsprechenden Halteeinrichtung eingeklemmt werden kann. Somit ist eine einfache und sichere Befestigung des Distanzelementes 50 bereitgestellt. Das Abschlußdistanzelement 50 kann jedoch je nach Bedürfnis weiterhin mittels einer Schraube 54 befestigt werden.

Bei Benutzung von photovoltaischen Elementen als Fassadenelemente 30 ist es vorteilhaft zwischen dem photovoltaischen Element 30 und dem Dämmelement einen Hohlraum 60 vorzusehen. Die Größe des Hohlraumes kann mittels der Höhe der Profilrippe 22 eingestellt werden. Dieser Hohlraum 60 kann zur Hinterlüftung hinter dem photovoltaischen Element 30 benutzt werden, um ein geeignetes Temperaturgefälle bzw. -gradienten in dem photovoltaischen Element 30 zu erzeugen, wodurch der Wirkungsgrad der photovoltaischen Zelle verbessert werden kann. In diesem Hohlraum 60 kann durch ein Gebläse, Lüfter oder dgl. und/oder durch natürliche Luft-Konvektion ein Luftstrom erzeugt werden. Die natürliche Luftkonvektion kann insbesondere durch eine geeignete Neigung (z.B. größer als etwa 3°, bevorzugt größer als 5° von der Horizontalen) des Dach- und/oder Wandaufbaus erzielt werden. Die Abluft kann auch mittels eines Wärmetauschers oder dgl. zur Energiegewinnung verwendet werden. Wenn eine vollständige Nutzung der Abwärme können Profile (z.B. die Distanzprofile 50) zur vollständigen Abdichtung der Strömungsbereiche des Hohlraumes 60 verwendet werden. Damit kann mit hocheffizienten Lüftern die thermische Abwärme im Gebäude benutzt werden und/oder über einen Wärmetauscher Luft/Wasser zwischengespeichert werden.

### Bezugszeichen

- 10: tragfägiges Teil
- 20: Dämmelement
- 20A: Dämmelementenebene
- 22: Profilrippe
- 22A: obere Profilfläche
- 24: Sicken
- 25: Wulst bzw. Vorsprung
- 26: Elementenstoß
- 30: Fassadenelement, insbesondere photovoltaisches Element
- 40: Halteeinrichtung
- 42: Anlageprofil bzw. -element
- 42A: Anlagefläche
- 43: Ausrichtfläche
- 44: Klemmprofil bzw. -element
- 44A: Klemmfläche
- 45: Ausrichtfläche
- 46, 47: elastisches Element
- 48, 48': Schraube
- 49: Füllprofil bzw. -element
- 50: Distanzprofil bzw. -element
- 52: auskragende Bereiche
- 54: Schraube
- 56: Klemmvorsprung
- 60: Hohlraum

## Patentansprüche

1. Dach- und/oder Wandaufbau zur Anbringung bzw. Befestigung an einem Bereich einer Gebäudewand und/oder eines Gebäudedaches,
wobei an einem tragfähigem Teil (10) des Gebäudes ein Dämmelement (20) befestigt ist,
wobei das Dämmelement (20) an der vom tragfähigem Teil (10) abgewandten Seite zumindest eine Profilrippe (22) aufweist, und
wobei an der Profilrippe (22) ein Außen- bzw. Fassadenelement (30), insbesondere ein photovoltaisches Element mittels einer Halteeinrichtung (40) angebracht ist bzw. anliegt.

2. Dach- und/oder Wandaufbau nach Anspruch 1, wobei die Halteeinrichtung (40) mindestens ein Auflage- bzw. Anlageprofil (42) und ein Druck- bzw. Klemmprofil (44) aufweist, wobei das Anlageprofil (42) und das Klemmprofil (44) jeweils einen Anlagebereich (42A, 44A) aufweisen, an dem das Fassadenelement (30) anliegt, wobei das Fassadenelement (30) zwischen dem Anlageprofil (42) und dem Klemmprofil (44) eingeklemmt ist.

3. Dach- und/oder Wandaufbau nach Anspruch 2, wobei das Anlagenprofil und das Klemmprofil (44) aufeinander zu bewegbar sind und mittels eines Verstellgliedes (48; 48') bevorzugt einer Schraube(48; 48') bewegt werden, um das Fassadenelement (30) zwischen dem Anlageprofil (42) und dem Klemmprofil (44) einzuklemmen.

4. Dach- und/oder Wandaufbau nach Anspruch 2 oder 3, wobei das Anlageprofil (42) und das Klemmprofil (44) mittels an diesen vorgesehenen Ausrichtflächen (42A, 44A) in ihrer Position zueinander ausgerichtet werden, wobei die Ausrichtflächen (42A, 44A) bevorzugt gleitend aneinander anliegen.

5. Dach- und/oder Wandaufbau nach einem der vorangehenden Ansprüche 2 bis 4, wobei zwischen Anlageprofil (42) und Fassadenelement (30) und/oder zwischen Klemmprofil (44) und Fassadenelement (30) ein elastisches Zwischenelement (46; 47) vorgesehen ist.

6. Dach- und/oder Wandaufbau nach einem der vorangehenden Ansprüche, wobei die Halteeinrichtung (40) mittels einer Befestigungsschraube (48; 48') durch das Dämmelement (20) hindurch direkt an dem tragfähigem Teil (10) des Gebäudes befestigt ist.

7. Dach- und/oder Wandaufbau nach Anspruch 6, wobei die Befestigungsschraube (48; 48') bevorzugt im Anlagebereich eine Dichtungseinrichtung aufweist, welche bevorzugt eine Unterlegscheibe mit aufvulkanisierter Neoprendichtung umfaßt.

8. Dach- und/oder Wandaufbau nach einem der vorangehenden Ansprüche, wobei das tragfähige Teil (10) einen Pfosten und/oder einen Riegel des Gebäudes umfaßt.

9. Dach- und/oder Wandaufbau nach einem der vorangehenden Ansprüche, wobei das Dämmelement (20) ein Sandwich-Verbundelement ist, welches eine Außenschicht, eine Innenschicht und dazwischen eine Kernschicht, insbesondere aus Polyurethan und/oder Mineralwolle aufweist, wobei die Außenschicht und/oder die Innenschicht angeschäumt bzw. schubfest miteinander verklebt ist/sind.

10. Dach- und/oder Wandaufbau nach Anspruch 9, wobei die Außenschicht und/oder Innenschicht aus einem oder mehreren der folgenden Materialien gebildet werden: Stahl, verzinktem Stahl, Aluminium, Kupfer.

11. Dach- und/oder Wandaufbau nach Anspruch 10, wobei das Material bedruckt und/oder beschichtet ist.

12. Dach- und/oder Wandaufbau nach einem der vorangehenden Ansprüche, wobei die Profilrippe (22) des Dämmelementes (20) mittels einer Außenschicht, bevorzugt aus Metall oder einer Legierung verstärkt ist.

13. Dach- und/oder Wandaufbau nach einem der vorangehenden Ansprüche, wobei eine Vielzahl von benachbart zueinander angeordneten Dämmelementen (20) vorgesehen sind, wobei die Dämmelemente (20) bevorzugt durch einen an jeweils einem der Dämmelemente (20) vorgesehenen Elementenstoß (26) miteinander verbunden sind bzw. anliegen.

14. Dach- und/oder Wandaufbau nach Anspruch 13, wobei zwischen Elementenstoß (26) eines Dämmelementes (20) und dem diesen benachbartem Dämmelement (20) ein Dichtelement, bevorzugt ein Dichtstreifen eingesetzt ist.

15. Dach- und/oder Wandaufbau nach Ansprcuh 13 oder 14, wobei zwischen dem Fassadenelement (30) und dem Dämmelement bereichsweise ein Hohlraum (60) vorgesehen ist, welcher zumindest teilweise hinterlüftbar ist.

16. Dach- und/oder Wandaufbau nach Anspruch 15, wobei die erwärmte Luft in dem Hohlraum (60) zur Gewinnung von Energie und/oder zur Umwandlung in andere Energieformen zumindest teilweise verwendet wird.

17. Dach- und/oder Wandaufbau nach einem der vorangehenden Ansprüche, wobei an einem Randabschnitt des Dach- und/oder Wandaufbaus ein Abschluß- bzw. Füllelement (49) zumindest bereichsweise, bevorzugt zwischen dem Anlageprofil (42) und dem Klemmprofil (44), vorgesehen ist.

18. Dach- und/oder Wandaufbau nach einem der vorangehenden Ansprüche, wobei eine Vielzahl von benachbart zueinander angeordneten Fassadenelementen (30) vorgesehen ist und die Haltevorrichtung (40) in einer Querrichtung, insbesondere in einer Richtung im wesentlichen senkrecht zu dem Anlageprofil (42) und Klemmprofil (44), zumindest ein Distanzprofil (50) aufweist, welche die Fassadenelemente (30) beabstandet.

19. Dach- und/oder Wandaufbau nach Anspruch 18, wobei das Distanzprofil (50) zumindest einen im wesentlichen in Längsrichtung angeordneten Vorsprung (56) aufweist, welcher bevorzugt zwischen dem Anlageprofil (42) und Klemmprofil (44) klemmbar ist.

20. Dach- und/oder Wandaufbau nach einem der vorangehenden Ansprüche, wobei eine Vielzahl von Fassadenelementen (30) bevorzugt um mehr als 3°, am bevorzugtesten um mehr als 5° zur Horizontalen geneigt angeordnet sind.

21. Verwendung eines Dach- und/oder Wandaufbaus nach einem der vorangehenden Ansprüche zur Anbringung von einer oder mehreren photovoltaischen Zellen bzw. Modulen an einem Gebäude.
